# EUROPÄISCHE PATENTANMELDUNG

(11) **EP 3 162 177 A1**
(43) Veröffentlichungstag der Anmeldung: **03.05.2017**
(21) Anmeldenummer: 16401070.4
(22) Anmeldetag: 21.10.2016
(51) Int. Cl.: A01B 45/02, A01D 34/54, A01D 34/82, A01D 75/20, A01D 34/62

(54) **VORRICHTUNG ZUR PFLEGE VON GRÜNFLÄCHEN**

(30) Priorität: 28.10.2015 DE 102015118367
(71) Anmelder: Amazonen-Werke H. Dreyer GmbH & Co. KG, 49205 Hasbergen (DE)
(72) Erfinder: Klein, Laurent, 57910 Hambach (FR)

(57) **Zusammenfassung**

Es wird eine Vorrichtung (1) zur Pflege von Grünflächen (2), insbesondere von Rasen- und Wiesenflächen vorgestellt, mit einem Fahrgestell, an dem eine Bearbeitungseinheit (3) festgelegt ist, die einen quer zur Fahrtrichtung (F) ausgerichteten, um eine Rotationsachse (4) drehbaren und Bearbeitungswerkzeuge (5) aufweisenden, in einem Gehäuse (6) angeordneten Bearbeitungsrotor (7) umfasst, wobei mindestens ein an einem Höhenführungsrahmen (8) angeordnetes Führungselement (9, 10) und zur Einstellung der Arbeitshöhe des Bearbeitungsrotors (7) eine Verstelleinrichtung (11) vorhanden sind. Die erfindungsgemäße Weiterbildung besteht darin, dass an der der Grünfläche (2) zugewandten Unterseite (12) des Höhenführungsrahmens (8) ein kinetische Energie abbauende Eigenschaften aufweisender Schlagschutz (13) angeordnet ist.

## Beschreibung

Die Erfindung betrifft eine Vorrichtung zur Pflege von Grünflächen gemäß dem Oberbegriff des Patentanspruches 1.

Eine derartige Vorrichtung zur Pflege von Grünflächen, insbesondere von Rasen- und Wiesenflächen, ist beispielsweise in der EP 0 712 568 B1 beschrieben. Die Vorrichtung ist gemäß dem Offenbarungsgehalt der Druckschrift als ein mit einem Antriebsmotor ausgestattetes Fahrzeug ausgeführt, das ein Fahrgestell aufweist, an dem eine als "Mähwerk" bezeichnete Bearbeitungseinheit festgelegt ist. Die Bearbeitungseinheit besteht ihrerseits aus einem quer zur Fahrtrichtung ausgerichteten, um eine Rotationsachse drehbaren und Bearbeitungswerkzeuge aufweisenden Bearbeitungsrotor, der in einem Gehäuse angeordnet ist. Vor und hinter dem Bearbeitungsrotor sind darüber hinaus durch einen Höhenführungsrahmen verbundene Führungselemente vorhanden, wobei es sich hierbei einerseits um Laufräder und diesen gegenüberliegend, also rückseitig des Bearbeitungsrotors, um eine Druckwalze handelt. Zur Einstellung der Arbeitshöhe des Bearbeitungsrotors und damit der Schnitthöhe weist die Vorrichtung zur Pflege von Grünflächen nach der EP 0 712 568 B1 ferner eine Verstelleinrichtung auf.

Bei der Bearbeitung von Grünflächen kommt es häufig vor, dass von dem Bearbeitungsrotor auch Gegenstände, wie Äste oder Steine erfasst und durch die hohe Rotationsgeschwindigkeit des Bearbeitungsrotors weggeschleudert werden. Dies kann zu einer Gefahr für umstehende Personen oder zu Schäden an benachbarten Einrichtungen und/oder Gegenständen führen. Aus diesem Grund weisen Vorrichtungen zur Bearbeitung von Grünflächen heutiger Bauart einen Schlagschutz auf, der die vom Bearbeitungsrotor aufgeworfenen Gegenstände abfängt. Die Aufgabe des Schlagschutzes besteht folglich darin, die weggeschleuderten Gegenstände abzufangen und ihre kinetische Energie abzubauen. Ein derartiger Schlagschutz geht zum Beispiel aus dem Prospekt "Amazone Profihopper zDrive" (MI4953 (de_DE) 01.15) der Firma Amazonen-Werke H. Dreyer GmbH & Co. KG, Seiten 4 und 5 hervor. Hierbei wurde der Schlagschutz jedoch an der Frontseite des den Bearbeitungsrotor aufnehmenden Gehäuses angeordnet. Der Schlagschutz besteht aus einer Reihe dicht nebeneinander angeordneter Kettensegmente, deren Länge ausreichend ist, den freien Abstand zwischen dem Untergrund und der Unterseite des Gehäuses zu überbrücken. Nachteilig ist bei dieser Lösung jedoch, dass bei einer Veränderung der Schnitthöhe das Gehäuse zusammen mit dem Bearbeitungsrotor angehoben beziehungsweise abgesenkt wird. Dadurch wird auch der Schlagschutz in seiner Höhenlage verändert, so dass es in extremen Situationen sogar dazu kommen könnte, dass zwischen dem Untergrund und dem unteren Ende des Schlagschutzes ein Spalt verbleibt, der zumindest potentiell die Gefahr in sich birgt, dass aufgeworfene Gegenstände ungehindert passieren können.

Die Aufgabe der Erfindung besteht darin, eine Vorrichtung zur Pflege von Grünflächen bereitzustellen, deren Aufbau möglichst einfach gehalten ist und die einen Schlagschutz aufweist, der in jeder eingestellten Bearbeitungshöhe vom Bearbeitungsrotor aufgeworfene Gegenstände zuverlässig abfängt.

Die Aufgabe wird mit den Merkmalen des Patentanspruches 1 gelöst.
Weitere Ausgestaltungen sind in den sich anschließenden Unteransprüchen widergegeben.

So wurde eine Vorrichtung zur Pflege von Grünflächen, insbesondere von Rasen- und Wiesenflächen, mit einem Fahrgestell, an dem eine Bearbeitungseinheit festgelegt ist, die einen quer zur Fahrtrichtung ausgerichteten, um eine Rotationsachse drehbaren und Bearbeitungswerkzeuge aufweisenden, in einem Gehäuse angeordneten Bearbeitungsrotor umfasst, wobei mindestens ein an einem Höhenführungsrahmen angeordnetes Führungselement und zur Einstellung der Arbeitshöhe des Bearbeitungsrotors eine Verstelleinrichtung vorhanden sind, dahingehend weitergebildet, dass an der der Grünfläche zugewandten Unterseite des Höhenführungsrahmens ein kinetische Energie abbauende Eigenschaften aufweisender Schlagschutz angeordnet ist.

Der wesentliche Unterschied zu den aus dem Stand der Technik bekannten Lösungen besteht hierbei in der Anordnung des Schlagschutzes an der Unterseite des Höhenführungsrahmens. Da der Höhenführungsrahmen bei der Verstellung der Schnitthöhe nicht mit bewegt wird, ist zu jedem Zeitpunkt zuverlässig gewährleistet, dass der Schlagschutz den Spalt zwischen der zu bearbeitenden Grünfläche und der Unterseite der Vorrichtung abschottet. Die Erfindung ist baulich einfach gehalten, so dass sie fertigungstechnisch einfach umgesetzt und damit kostengünstig zum Einsatz gebracht werden kann. Neben den wirtschaftlichen Vorteilen erweist sich diese neuartige Anordnung des Schlagschutzes als extrem zuverlässig und sicher. Die Gefahr der Beschädigung umliegender Einrichtungen oder der Verletzung umstehender Personen kann dadurch ausgeschlossen werden.

Der Schlagschutz kann als ein einteiliges Element gestaltet sein. In vorteilhafter Weise erstreckt er sich stets über die gesamte Breite der Vorrichtung zur Pflege von Grünflächen. Bevorzugt kommt jedoch ein mehrteiliger Schlagschutz zum Einsatz, der sich über die gesamte Breite der Vorrichtung erstreckt. Die mehrteilige Ausführung des Schlagschutzes bringt eine zusätzliche Sicherheit mit sich, die darin zu sehen ist, dass selbst bei einer lokalen Beschädigung des Schlagschutzes immer noch ein hohes Maß an Sicherheit gewährleistet werden kann. Anders ausgedrückt ist die Wahrscheinlichkeit für die Verletzung umstehende Personen durch von dem Bearbeitungsrotor aufgeworfene Gegenstände selbst dann äußerst gering, wenn einzelne Elemente des Schlagschutzes während des Einsatzes der Vorrichtung beschädigt werden oder ausfallen. Darüber hinaus muss in einem derartigen Fall nicht der gesamte Schlagschutz ausgetauscht werden. Vielmehr reicht es aus, die beschädigten Elemente durch neue zu ersetzen. Damit reduziert sich auch der Wartungs- und Reparaturaufwand einer erfindungsgemäßen Vorrichtung zur Pflege von Grünflächen.

Eine weitere, sehr vorteilhafte Ausgestaltung der Erfindung ist darüber hinaus darin zu sehen, dass der Schlagschutz beweglich an der Unterseite des Höhenführungsrahmens befestigt ist. Durch die Beweglichkeit des Schlagschutzes ist dieser in der Lage, sich dem Untergrund optimal anzupassen ohne dass er dabei den Kontakt zu der zu bearbeitenden Grünfläche verliert. Dieser Umstand ist deshalb wesentlich, weil nur durch eine permanente Abschottung des zwischen der Unterseite des Gehäuses und dem Untergrund das Herausschleudern von Gegenständen durch den Bearbeitungsrotor vermieden werden kann.

Eine weiterbildende Maßnahme der Ausführung des Schlagschutzes besteht ferner darin, dass der Schlagschutz, in Fahrtrichtung der Vorrichtung betrachtet, aus mindestens zwei, einen Versatz und quer zur Fahrtrichtung betrachtet, eine Überlappung zueinander aufweisenden Reihenabschnitten besteht. Auch in diesem Zusammenhang ist der wesentliche Vorteil darin zu sehen, dass selbst bei der Beschädigung einzelner Abschnitte des Schlagschutzes immer noch ein hohes Maß an Sicherheit gegen das unerwünschte Auswerfen auf der Grünfläche liegender und vom Bearbeitungsrotor erfasster Gegenstände gegeben ist. Die mehrgliedrige Ausführung des Schlagschutzes mit Überlappung und Versatz führt ebenfalls zu einer Erleichterung des Austauschs beschädigter Elemente und somit zu einer Verbesserung der Reparaturmöglichkeiten.

Eine besonders einfache Variante ist weiterhin darin zu sehen, dass der Schlagschutz aus einem elastisch verformbaren Werkstoff, vorzugsweise aus einem Kunststoff, einem Gummiwerkstoff oder einem Verbundwerkstoff mit Kunststoff beziehungsweise Gummi besteht. Die genannten Werkstoffe sind kostengünstig erhältlich, so dass der Fertigungsaufwand und damit auch die Herstellungskosten einer erfindungsgemäßen Vorrichtung zur Pflege von Grünflächen reduziert werden können. Der Austausch gegebenenfalls beschädigter Elemente des Schlagschutzes lässt sich auch in diesem Fall auf einfache Weise realisieren. Hinzu kommt noch, dass durch die gewählten Werkstoffe ein geringes Verletzungsrisiko für den Anwender besteht, wenn er Teile des Schlagschutzes austauschen möchte oder muss.

Eine andere Ausführungsform des Schlagschutzes ist darin zu sehen, dass der Schlagschutz aus einer Vielzahl äquidistant zueinander angeordneter, metallischer Platten- und/oder Kettensegmente besteht. Bevorzugt werden die Platten- und/oder Kettensegmente hierbei unmittelbar aneinandergrenzend an der Unterseite des Höhenführungsrahmens befestigt, so dass keine Lücken entstehen. Die Verwendung metallischer Kettensegmente hat zudem den Vorteil, dass sich diese aufgrund ihres Eigengewichts in jeder Situation selbstständig ausrichten. Die Platten- und/oder Kettensegmente sind beweglich, pendelnd, etc. aufgehängt Wie eingangs bereits erwähnt wurde, ist es bereits bekannt, eine Höhenverstellung des Bearbeitungsrotors mittels einer Spindel vorzunehmen, die manuell betätigt wird. Ein weiterführender Vorschlag der Erfindung geht zur Erleichterung der Arbeit mit der Vorrichtung zur Pflege von Grünflächen und zur Erhöhung des Automatisierungsgrades daher dahin, die Verstelleinrichtung mit einer mechanisch, hydraulisch oder elektromotorisch ansteuerbaren Spindel auszustatten. Der Nutzer der Vorrichtung zur Pflege von Grünflächen kann somit bevorzugt während der Bearbeitung der Grünfläche jederzeit und flexibel eine Verstellung der Arbeitshöhe des Bearbeitungsrotors vornehmen, ohne die Arbeit unterbrechen zu müssen.

Weitere Einzelheiten der Erfindung sind den nachfolgend näher beschriebenen Zeichnungen zu entnehmen. Die Zeichnungen zeigen in der
- Fig. 1:: ausschnittsweise eine Schnittdarstellung einer Vorrichtung zur Pflege von Grünflächen in einer Seitenansicht,
- Fig. 2:: eine vergrößerte Darstellung der in Fig. 1 gezeigten Ausführung der Vorrichtung mit einer angehobenen Position des Bearbeitungsrotors,
- Fig. 3:: eine vereinfachte Darstellung der Vorrichtung zur Pflege von Grünflächen während der Bearbeitung unebener Untergründe
- und Fig. 4:: eine stark vergrößerte Darstellung des Bereichs der Anbringung des Schlagschutzes.

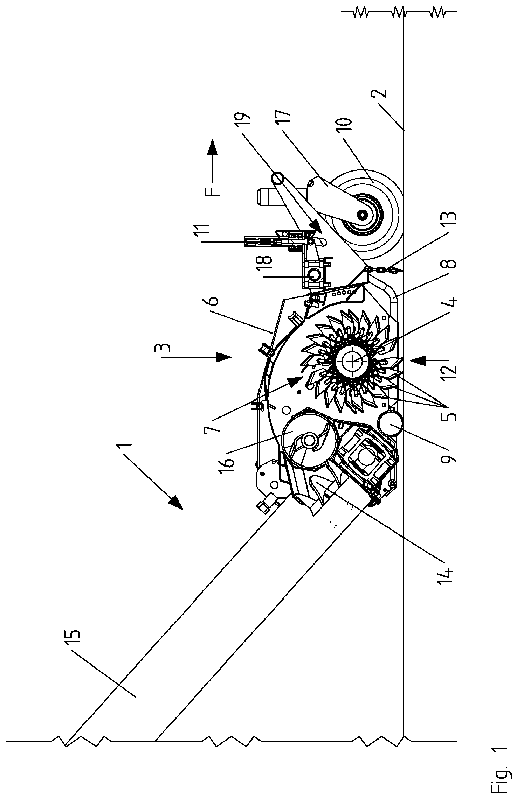

In der Fig. 1 ist ausschnittsweise eine Schnittdarstellung einer Vorrichtung 1 zur Pflege von Grünflächen 2 in einer Seitenansicht gezeigt. Die Vorrichtung 1 besteht im Wesentlichen aus einer Bearbeitungseinheit 3, die ein Gehäuse 6 und einen in dem Gehäuse 6 geschützt aufgenommenen und um eine Rotationsachse 4 drehbar gelagerten Bearbeitungsrotor 7 umfasst. Der Bearbeitungsrotor 7 verfügt entlang seines Außenumfanges über eine Vielzahl einzelner Bearbeitungswerkzeuge 5, die je nach Ausführung dazu geeignet sind, die Grünfläche zu pflegen, das heißt, beispielsweise einen Rasen abzumähen, ihn zu vertikutieren oder einfach Laub beziehungsweise Unrat aufzusammeln. Durch die Rotationsbewegung des Bearbeitungsrotors 7 werden durch die Bearbeitungswerkzeuge 5 beispielsweise Grashalme oder Pflanzen vom Untergrund 2 abgetrennt und zu einer Transportschnecke 16 gefördert, deren Anordnung bei dem in Fig. 1 gezeigten Beispiel quer zur Fahrtrichtung F der Vorrichtung ausgerichtet ist. Diese Transportschnecke 16 konzentriert diese Bestandteile etwa mittig und übergibt sie dort einer Förderschnecke 14, die in einem Schneckengehäuse 15 drehbar gelagert ist. Mit Hilfe der Förderschnecke 14 erfolgt anschließend der Abtransport der Grünabfälle in einen in der Fig. 1 nicht gezeigten Auffangbehälter.

Der Bearbeitungsrotor 7 ist in dem Gehäuse 6 aufgenommen, wobei ein Höhenführungsrahmen 8 relativ zu dem Gehäuse 6 bewegbar ausgeführt und angeordnet ist. Bezogen auf die Fahrtrichtung F der Vorrichtung 1, befindet sich hinter dem Bearbeitungsrotor 7 ein erstes Führungselement 9, das im vorliegenden Fall als eine Druckwalze ausgeführt ist, die die bearbeitete Grünfläche 2 nachträglich glättet. Auf der diesem Führungselement 9 gegenüberliegenden Seite des Höhenführungsrahmens 8 ist mindestens ein weiteres Führungselement 10 vorhanden, bei dem es sich in diesem Fall um ein pendelnd gelagertes Führungsrad handelt. Üblicherweise weist der Höhenführungsrahmen 8 zwei derartige Führungsräder auf. Da der gesamte Höhenführungsrahmen 8 unabhängig von einer über eine Verstelleinrichtung 11 gewährleisteten Höhenverstellung des Bearbeitungsrotors 7 zur Veränderung der Schnitthöhe stets eine konstante Höhenanordnung aufweist, ist bei dem dargestellten Ausführungsbeispiel ein Schlagschutz 13 an der Unterseite 12 des Höhenführungsrahmens 8 befestigt. Wie aus der Darstellung in Fig. 1 ferner entnehmbar ist, besteht der Schlagschutz 13 hierbei aus einer Reihe äquidistant zueinander angeordneter Kettensegmente aus metallischen Kettengliedern. Diese Kettenglieder sind beweglich zueinander. Anstelle der Kettenglieder können auch pendelnd aufgehängte Plattenelemente vorgesehen sein. Es kann auch eine Kombination aus Ketten- und Plattenelementen vorgesehen sein. Der Schlagschutz 13 erstreckt sich dabei über die gesamte Breite der Vorrichtung 1 zur Pflege von Grünflächen 2, um zu verhindern, dass vom Bearbeitungsrotor 7 aufgeworfene Gegenstände in die Umgebung geschleudert werden. Die Verstelleinrichtung 11 wirkt in diesem Fall mit einer Führungsnut 19 zusammen, so dass das Gehäuse 6 zusammen mit dem Bearbeitungsrotor 7 um eine Schwenkachse 18 verschwenkt werden kann, während der Höhenführungsrahmen 8 seine Position unverändert beibehält. Folglich ist das Gehäuse 6 relativ zum Höhenführungsrahmen 8 beweglich ausgeführt.

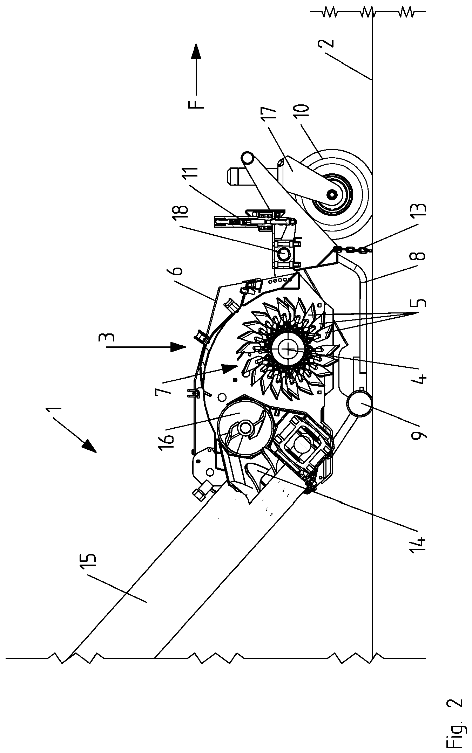

Die Fig. 2 zeigt die im Zusammenhang mit der Fig. 1 beschriebene Vorrichtung 1 zur Pflege von Grünflächen 2 noch einmal in einer vergrößerten Ansicht. Hierbei ist anzumerken, dass die Verstelleinrichtung 11 in einer Weise eingestellt wurde, dass eine möglichst hohe Position des Bearbeitungsrotors 7 gegeben ist und folglich eine große Schnitthöhe der zu bearbeitenden Grünfläche 2 gewährleistet werden kann. Einfacher ausgedrückt ist hierbei der Bearbeitungsrotor 7 zusammen mit dem Gehäuse 6 angehoben worden. Die Führungsnut 19 ist in diesem Beispiel nicht sichtbar, da die Verstelleinrichtung 11 bis in die unterste Position der Führungsnut 19 verstellt wurde.

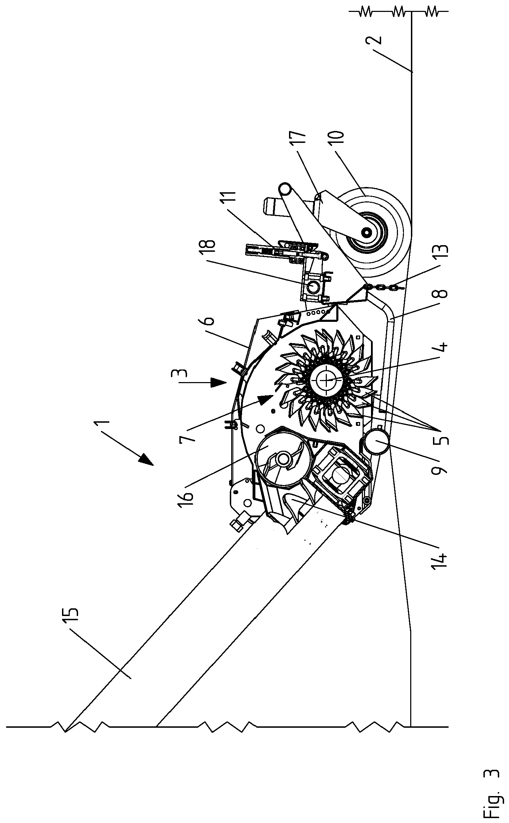

Wie die Fig. 3 darüber hinaus anschaulich darstellt, ist eine erfindungsgemäße Vorrichtung 1 zur Pflege von Grünflächen 2 auch geeignet, bei unebenem Untergrund eingesetzt zu werden. So versinnbildlicht die Fig. 3 eine hügelige Landschaft, wobei zu erkennen ist, dass durch die Befestigung des Schlagschutzes 13 an der Unterseite 12 des Höhenführungsrahmens 8 jeweils gewährleistet werden kann, dass der Schlagschutz den freien Raum zwischen Höhenführungsrahmen 8 und Untergrund 2 vollständig abschirmt. Die Höhenlage des Schlagschutzes 13 wird folglich weder durch einen unebenen Untergrund 2, noch durch die Veränderung der Schnitthöhe beeinflusst.

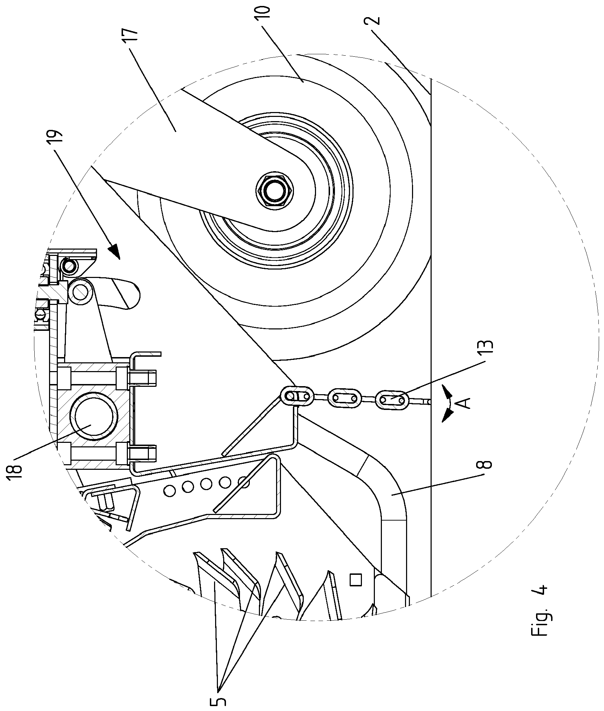

Dieser Umstand ist auch aus der Fig. 4 ersichtlich. Hieraus geht noch einmal deutlicher, als in den zuvor beschriebenen Fig. 1-3 hervor, wie die Verstelleinrichtung 11 mit der Führungsnut 19 zusammenwirkt, so dass eine Verstellbewegung des Gehäuses 6 um die Schwenkachse 18 möglich wird. Darüber hinaus ist aus der Fig. 4 erkennbar, dass der Schlagschutz 13 aus einer Vielzahl einzelner Kettensegmente besteht, die ihrerseits jeweils aus mehreren Kettengliedern zusammengesetzt sind. Der Schlagschutz 13 reicht dabei von der Unterseite 12 des Höhenführungsrahmens 8 bis zum Untergrund 2 und schirmt somit den gesamten offenen Bereich auf der Rückseite des als Führungsrad ausgeführten Führungselementes 10 ab. Durch den Doppelpfeil A wird in der Fig. 4 symbolisiert, dass der Schlagschutz 13 begrenzt bewegbar ausgeführt ist, sodass er einerseits kinetische Energie abbauen und andererseits Ausweichbewegungen vollziehen kann, wenn dies erforderlich ist.

### BEZUGSZEICHENLISTE:

1. Vorrichtung
2. Grünfläche / Untergrund
3. Bearbeitungseinheit
4. Rotationsachse
5. Bearbeitungswerkzeug
6. Gehäuse
7. Bearbeitungsrotor
8. Höhenführungsrahmen
9. Führungselement
10. Führungselement
11. Verstelleinrichtung
12. Unterseite
13. Schlagschutz
14. Förderschnecke
15. Schneckengehäuse
16. Transportschnecke
17. Radträger
18. Schwenkachse
19. Führungsnut

## Patentansprüche

1. Vorrichtung (1) zur Pflege von Grünflächen (2), insbesondere von Rasen- und Wiesenflächen, mit einem Fahrgestell, an dem eine Bearbeitungseinheit (3) festgelegt ist, die einen quer zur Fahrtrichtung (F) ausgerichteten, um eine Rotationsachse (4) drehbaren und Bearbeitungswerkzeuge (5) aufweisenden, in einem Gehäuse (6) angeordneten Bearbeitungsrotor (7) umfasst, wobei mindestens ein an einem Höhenführungsrahmen (8) angeordnetes Führungselement (9, 10) und zur Einstellung der Arbeitshöhe des Bearbeitungsrotors (7) eine Verstelleinrichtung (11) vorhanden sind, **dadurch gekennzeichnet, dass** an der der Grünfläche (2) zugewandten Unterseite (12) des Höhenführungsrahmens (8) ein kinetische Energie abbauende Eigenschaften aufweisender Schlagschutz (13) angeordnet ist.

2. Vorrichtung zur Pflege von Grünflächen nach Anspruch 1, **dadurch gekennzeichnet, dass** der Schlagschutz (13) mehrteilig ist und sich über die gesamte Breite der Vorrichtung (1) erstreckt.

3. Vorrichtung zur Pflege von Grünflächen nach einem der vorstehend genannten Ansprüche, **dadurch gekennzeichnet, dass** der Schlagschutz (13) beweglich an der Unterseite (12) des Höhenführungsrahmens (8) befestigt ist.

4. Vorrichtung zur Pflege von Grünflächen nach einem der vorstehend genannten Ansprüche, **dadurch gekennzeichnet, dass** der Schlagschutz (13) aus mindestens zwei, in Fahrtrichtung (F) der Vorrichtung (1) betrachtet, einen Versatz und, quer zur Fahrtrichtung (F) betrachtet, eine Überlappung zueinander aufweisenden Reihenabschnitten besteht.

5. Vorrichtung zur Pflege von Grünflächen nach einem der vorstehend genannten Ansprüche, **dadurch gekennzeichnet, dass** der Schlagschutz (13) aus einem elastisch verformbaren Werkstoff, vorzugsweise aus einem Kunststoff, einem Gummiwerkstoff oder einem Verbundwerkstoff mit Kunststoff beziehungsweise Gummi besteht.

6. Vorrichtung zur Pflege von Grünflächen nach einem der Ansprüche 1 bis 4, **dadurch gekennzeichnet, dass** der Schlagschutz (13) aus einer Vielzahl äquidistant zueinander angeordneter, metallischer Platten- und/oder Kettensegmente besteht.

7. Vorrichtung zur Pflege von Grünflächen nach einem der vorstehend genannten Ansprüche, **dadurch gekennzeichnet, dass** die Verstelleinrichtung (11) eine mechanisch, hydraulisch oder elektromotorisch ansteuerbare Spindel aufweist.
